Europäisches Patentamt

European Patent Office

Office européen des brevets

(11) Publication number: **0 511 731 A2**

## EUROPEAN PATENT APPLICATION

(21) Application number: **92302035.8**

(22) Date of filing: **10.03.92**

(51) Int. Cl.5: **G06F 13/36**

(30) Priority: **29.03.91 JP 89004/91**

(43) Date of publication of application:
**04.11.92 Bulletin 92/45**

(84) Designated Contracting States:
**DE FR GB IT**

(71) Applicant: **International Business Machines Corporation**
**Old Orchard Road**
**Armonk, N.Y. 10504(US)**

(72) Inventor: **Ooba, Nobuyuki**
**3-13-26-404, Sugekitaura, Tama-ku**
**Kawasaki-shi, Kanagawa-ken(JP)**
Inventor: **Kawachiya, Kiyokuni**
**2-16-20-205, Taira, Miyamae-ku**
**Kawasaki-shi, Kanagawa-ken(JP)**

(74) Representative: **Burt, Roger James, Dr. et al**
**IBM United Kingdom Limited Intellectual**
**Property Department Hursley Park**
**Winchester Hampshire SO21 2JN(GB)**

(54) **Message-passing multiprocessor system.**

(57) In a multiprocessor system having a plurality of processors connected through a bus, upon requesting message passing, a processor notifies the request to other processors by designating identifiers of candidate destination processors from a register 5, an upper limit in a register UNR 8 and a lower limit in a register LNR 7. These provide a range for the number of destination processors required. A counter 9 counts acknowledge signals from candidate destination processors ready for message reception. A comparator 10 compares the count value with the lower and higher limit values in registers 7 and 8. If the count value is not less than the lower limit value, the sending processor determine that it can perform message passing. If the count value is treater than the upper limit value, the processor selects as many processors as the upper limit number from the candidate destination processors according to a rule based on priority, and then initiates the message passing to the processor thus selected.

FIG. 3

This invention relates to multiprocessor systems having a plurality of processors interconnected through a shared bus.

Tightly coupled multiprocessor systems having a plurality of processor modules interconnected through a shared bus have been proposed and are being used in practice. In such tightly coupled multiprocessor systems, a plurality of processors progress their processing by reading from and writing to the shared memory. In order for the system to perform parallel processing, a mechanism for synchronization among processors is indispensable, and the synchronization mechanism has a significant effect on the efficiency of the entire system.

A multiprocessor system of a shared memory type, in general, maintains synchronization among the processors by using a shared variable in the shared memory. As events asynchronously generated cannot be efficiently communicated among the processors only by means of the shared variable, a mechanism for permitting the processors to interrupt one another asynchronously is required.

A multiprocessor workstation proposed in "High-performance Multiprocessor Work Station TOP-1", Shimizu, Ohba, Moriwaki, Nakada and Obara, Symposium of Parallel Processing JSPP '89, pp. 155-162, is equipped with message passing hardware that permits processors to perform event-driven communication and request interruption among them. This workstation has two kinds of message passing schemes which are different from each other in terms of how to operate depending on whether a receiving or destination processor has actually received the message or not. Hereinbelow, these are referred to as "Everybody Message (Message to all destinations)" and "Anybody Message (Message to desired destinations)".

In the "Everybody Message" scheme, message passing is successfully performed if all the processors designated as destinations are ready for receipt of a message. If the reception buffer is not vacant even in one of the destination processors and cannot receive the message, the message passing results in failure, and the transmitting processor can know it. This method is effective for interruption of all processors desired for coherency control of TLB (Translation Look-aside Buffer) or the like.

In "Anybody Message" scheme, message passing results in success if at least one of the destination processors is ready for receipt of a message. Message passing results in failure only when none of the processors is ready for receipt. This method is effective for dispatching a given process to an arbitrary processor.

There are, however, other destination operations that have not been achieved by these two kinds of message methods. Consider, for example, a system in which eight processors send message to on another. Neither of the above methods could achieve a destination operation by which one of the processors can send a message only to arbitrary one of the other seven processors to interrupt it (although it has been possible to designate a particular processor as a designation). Also, it has not been possible to instruct that "message passing should result in success only when the message has been sent to four or more of the other seven processors". Therefore, it has been impossible to make, for example, two arbitrary processors stop the current processes and assign them new processes with hardware alone.

JP-A-1-251154 (PUPA) discloses a method for sending message to processors of a designated class. IBM Technical Disclosure Bulletin, Vol. 31, No. 6, p 438 discloses a method of sending message together with IDs of processors.

The invention seeks to provide a generalized asynchronous message passing method for a multiprocessor system coupled through a shared bus. In particular, the greatest advantage of the invention lies in flexible, specific control of designation of destination processors. More specifically, the invention makes it possible to designate $m$ arbitrary processors from all $n$ processors ($1 =< m =< n$) and to pass a message to $p$ and $q$ processors among the designated processors ($1 =< p =< q =< m =< n$). This fully includes functions of "Everybody Message" and "Anybody Message" referred to in the description on the prior art and enhances the designation of destination.

In a multiprocessor system according to the invention, each processor comprises a means for generating a message passing request signal, a means for generating acknowledge signals to message passing request signals from other processors, a means for counting acknowledge signals issued from other processors in response to its own message passing request signal, a means for defining the range of the number of message passing destination processors, and a means responsive to the count value of the acknowledge signals for determining whether message can be sent to such a number of processors as to be included within the range.

The scope of the invention is defined by the appended claims; and how it can be carried into effect is hereinafter particularly described with reference to the accompanying drawings, in which:-

Fig. 1 is a block diagram showing a multiprocessor system to which the invention is applicable;

Fig.2 is a block diagram illustrating the connection of a single processor to the bus in an embodiment of the invention;

Fig.3 is a block diagram showing part of the processor of Fig.2;

Fig.4 is a block diagram showing another part of the processor of Fig. 2;

Fig.5 is a time chart for explanation of the operation of the embodiment of Fig.2; and

Figs. 6(a), (b) and (c) are diagrams showing exchanges of signals for explanation of the operation of the embodiment of Fig. 2.

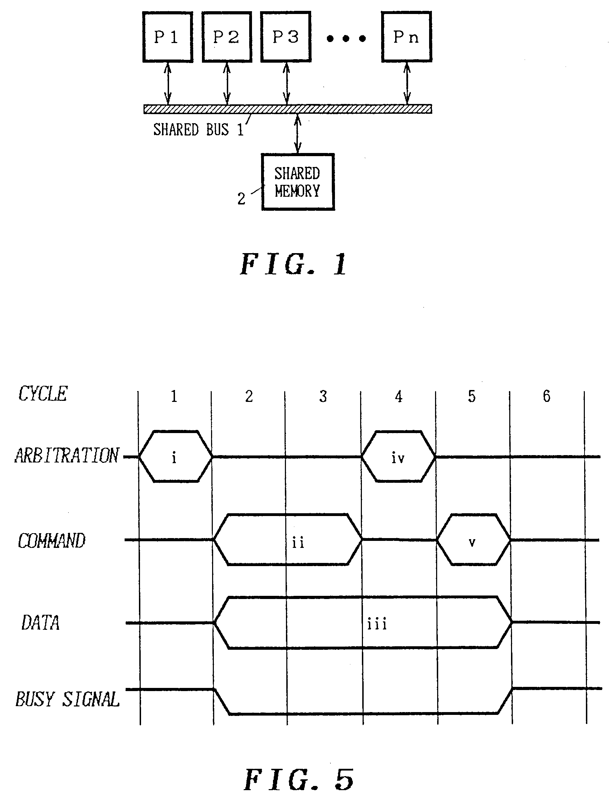

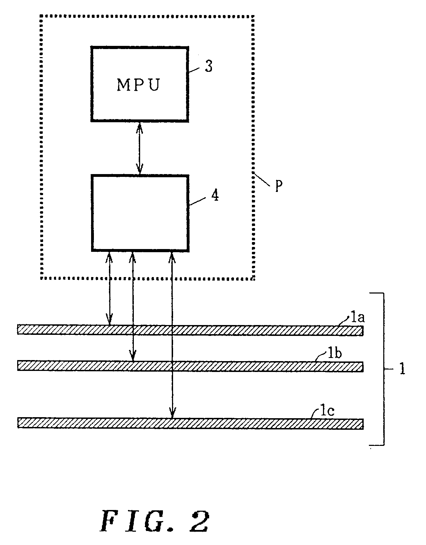

Several processors P1, P2 ... Pn (Fig. 1) are connected to a shared memory 2 via a shared bus 1. The shared bus 1 consists of a message exchange bus (Fig. 2) to which the invention is related, and a memory access bus and so forth. The processors exchange message with each other through the message exchange bus.

Each processor P has a microprocessing unit (MPU) 3 (Fig. 2), a message passing controller 4, and so forth. Although the processor P also has a memory access controller and other components, such components do not have direct relevance to the present invention and are not shown. The shared bus 1 includes a message address bus 1a, a message data bus 1b and an arbitration bus 1c. The message passing controller 4 is coupled directly to the MPU 3 and receives instructions. In practice, MPU 3 gives instructions for message passing to a register by executing I/O read/write. The message passing controller 4 exchanges messages with similar message passing controllers 4 of the other processors, via three buses, i.e., the message address bus 1a, the message data bus 1b, and the arbitration bus 1c.

The message address bus 1a is a control bus for designating a destination of a message and includes as many signal lines as the processor. If the total number of the processors is n, the message address bus 1a includes n lines, ADS1 to ADSn, corresponding to the respective processors.

The message data bus 1b is for sending the message itself. If m bits of a message are to be sent at one time, the bus 1b includes m signal lines.

The arbitration bus 1c is used for the arbitration of bus acquisition when message transmission requests are issued simultaneously from more than one of the message passing controllers 4, and is also used for response indicating whether a processor is ready for reception or not when the processor is a message passing destination. The arbitration bus 1c includes as many lines ARB1 to ARBn, as processors. Various kinds of arbitration methods may be used. For example, the method used in the shared bus in the publication "High-Performance Multiprocessor Work Station TOP-1" referred to hereinbefore.

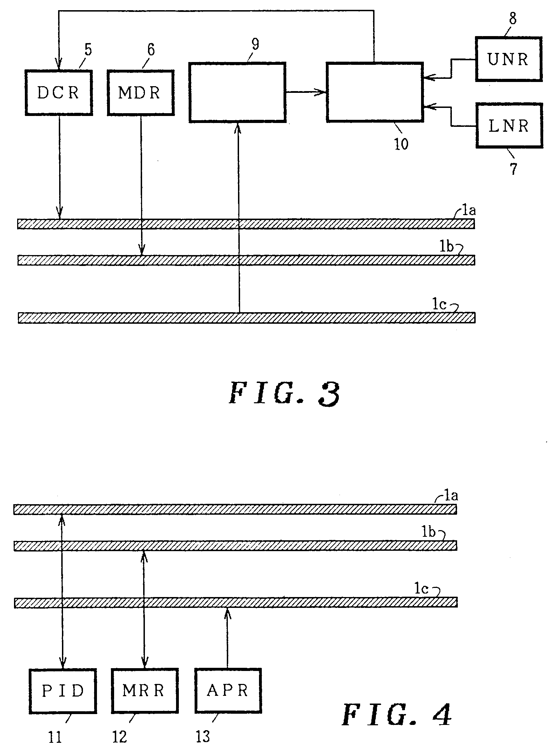

Part of the message passing controller 4 for transmission of a message includes a destination control register (DCR) 5 (Fig. 3), a message data register (MDR) 6, a lower limit receiving processor number register (LNR) 7, an upper limit receiving processor register (UNR) 8, a parallel counter 9, and a parallel comparator 10.

The DCR 5 is a register that designates destination of a message. With a system including eight processors, the DCR 5 consists of eight bits. Each bit corresponds to a respective processor, and processors whose bits are set to 1 are selected to be destinations. For example, if a message is to be sent from processor 1 to processors 2, 5, 6, 7, the DCR bits corresponding to the destination processors are set as follows:

0 1 0 0 1 1 1 0

The processors for which the bits of the DCR 5 are set to 1, are the only candidates as destinations of the message, and whether the message is actually sent to them depends on the content of the UNR 8 and the LNR 7, as explained hereinafter. Each bit of the DCR 5 is connected directly to the message address bus 1a, and the signal lines of the message address bus 1a are statically assigned to the respective processors beforehand upon initialization of the system, such as signal line ADS 1 to processor 1, signal line ADS 2 to processor 2, and so on.

The MDR 6 is used for writing in the content of a message to be sent and is connected to the message data bus 1b. When message passing succeeds, the contents of the MDR 6 flow onto the message bus 1b and reach one or more destination processors.

The LNR 7 is a register for designating how many processors must be ready for receiving a message for successful massage passing. If message passing is requested to succeed when one or more of destination processors are capable of message reception, the LNR 7 is set at 1. If message passing is requested to succeed when at least four processors are ready for reception, the LNR is set at 4. This is the register for setting $p$ referred to hereinbefore.

The UNR 8 is a register for determining the maximum number of processors to which the message should be sent when message passing is possible. By combining it with the LNR 7 referred to the above, specific designation of destination, is possible. For example if a message is to be sent to only one processor, both the LNR 7 and the UNR 8 should be set at 1. This is the register for setting $q$ referred to hereinbefore.

The parallel counter 9, connected to the arbitration bus 1c, counts how many processors have sent back their affirmative acknowledgements ACKs. As described before the arbitration bus 1c includes n signal lines each corresponding to the respective processor. When a message command is sent, ACK or ACKs return from one or more processors ready for receiving a message among the destination processors. The parallel counter 9 counts these ACKs.

The parallel comparator 10 is connected to the parallel counter 9, the LNR7 and the UNR8, and compares the content of the parallel counter 9 (the count indicating how many processors among the destination processors sent back ACKs) with the content of the LNR 7. When not less ACKs than the value set in the LNR 7 have been sent back, as many processors as the value of the UNR 8 are selected in the order priorities from higher to lower, and the bits corresponding to the processor thus selected are set to 1 in the DCR 5. This is the predetermined rule for selecting as many processors as the upper limit.

Part of the message passing controller 4 for reception of a message includes a processor ID register (PID) 11 (Fig. 4), a message reception register (MRR) 12, and an arbitration priority register (APR) 13.

The PID 11 is connected to the message address bus 1a, and is a register for holding the ID of the processor for which the message passing controller 4 serves. The ID is compared with destination addresses issued on the message address bus 1a.

The MRR 12 is connected to the message data bus 1b, and is a buffer for message data.

The APR 13 connected to the arbitration bus 1c, and is a register for holding priority for arbitration. Every time bus arbitration is executed, the priority increases by one, and returns to zero when it overflows. The system is designed so that the processors have different priorities from one another at any time.

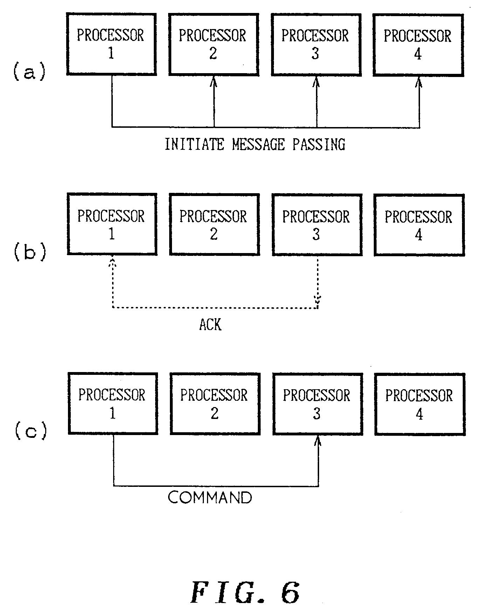

During operation of this embodiment, a plurality of processors may request a bus simultaneously. Accordingly, bus arbitration is first executed at timing i (Fig. 5) during cycle 1. This is a normal arbitration for acquiring the bus. A processor that has won the arbitration can start its message passing processing. During the following message passing operation, the message passing controller 4 that has won the bus keeps a busy signal active so that new bus arbitration does not occur.

The processor that won the bus issues message command (timing ii) and message data (timing iii), respectively, on the message address bus 1a and the message data bus 1b, starting in cycle 2. The message command is for designating on or more destination processors. The processor 1 (Fig. 6(a)) sends message command to the processors 2, 3 and 4. Each processor designated as the destination checks during cycle 3 its own condition for receiving message, and, only when it is ready for reception, does it send back to the arbitration bus ACK (timing iv) in cycle 4. The timing iv in cycle 4 is for a message ACK and not for a normal bus arbitration. In Processor 3 (Fig. 6(b)) alone is ready for receiving message, and sends back ACK. During cycle 5, the message passing controller of the sending processor observes ACK signals to determine which destination processors are ready for receiving the message. When as many ACKs as the minimum receiving processor number have been sent back, which means that message passing will result in success, the processor 1 sends command again to as many processors as the maximum receiving processor number (timing v) in cycle 5, and actually sends them the message. The processor 1 (Fig. 6(c)) sends command to the processor 3, and this processor, designated as a destination by the command finally receives the message data (timing iii) in cycle 5. The busy signal is then taken off.

As described hereinbefore, the invention performs message passing by designating the range for the number of destination processors, and thus enables flexible, specific message passing. Its effects are discussed below with reference to some examples.

If some processors permit the reception of a process and a certain process is desired to be assigned to one of them, an interruption request is sent to one processor to make the processor switch from the current process to the desired process.

When the conventional message passing method (Anybody Message) is used, a message is sent all processors that permit the reception of a process. One of a plurality of processors having received message and interrupted, must acquire exclusively the process by using a semaphore or the like in the shared memory. The processor that has won the semaphore initiates the processing for the assigned process. The remaining processors restore their conditions to those before the interruption.

In contrast, when the message passing method according to the invention is used, a message is sent to destination processors which permit the reception of a process. Then, one of the processors is automatically selected, the selected processor alone is interrupted, and processing of the process is initiated. Specifically, the use of the method according to the invention gives two advantages. One is that no interruption request is sent to processors that need not be interrupted. Interruption processing is serious one for processors. For example, an Intel 32-bit microprocessor 80386, takes only several to tens of cycles for addition, subtraction, multiplication, or subtraction, but requires 200 cycles or more for interruption. The other of the advantages is that it does not require quasi-software exclusive control such as semaphore. Exclusive control using a shared variable causes memory access which in turn causes access to the shared bus, and increases traffic of the shared bus. Unnecessary access to the shared bus adversely affects the performance of the system.

If processes A, B and C are waiting for processors to become available and execution of these processes A, B and C requires two processors, four processors, and five processors respectively, a message with a minimum receiving processor number of 2 and a maximum receiving processor number of 5 is sent by means of the message passing mechanism according to the invention. The process A, B or C can be selectively initiated depending on the number of the processors that have received the message, i.e., that have been acquired for execution of processes. More specifically, when two or three processors have received the message, then the process A will be initiated, when four processors have, then the process B will be initiated, and when five processors, then the process C will be initiated.

By use of this invention, the following types of message passing are possible. If a system includes eight processors, processor 1 to processor 8 coupled through a shared bus, one processor sending a message designates three pieces of information, first, ID or IDs of one or more message passing destination processors, second, the lower limit number of receiving processors, and third, the upper limit number of the receiving processors. The lower limit number of receiving processors indicates "how many processors, at the minimum, must be ready to receive a message", and the upper limit number of receiving processor indicates "how many, at the maximum, of the processors are selected as destinations from the processors ready to receive the message".

### Example 1

When the processor 1 is requested to send a message to all the seven other processors 2 to 8 (corresponding to Everybody Message), the destination ID are the processors 2, 3, 4, 5, 6, 7 and 8, the upper and lower limit processor numbers are both 7. Message passing is successful only when all seven processors 2 to 8 are ready for reception and a message is sent to these seven processors. When the processor 1 is requested to send message to one or more of the seven processors 2 to 8 (corresponding to Anybody Message), the lower limit processor number is 1 and the upper limit processor number is 7.

### Example 2

When the processor 1 is requested to send a message to only one of the five processors 2 to 6, the destination IDs are the processors 2, 3, 4, 5 and 6 and the lower and upper limit processor numbers are both 1.

### Example 3

When the processor 1 is requested to send a message to two or more of the four processors 5 to 8, the destination IDs are the processors 5, 6, 7 and 8, the lower limit processor number is 2 and the upper limit processor number is 4.

### Example 4

When the processor 1 is requested to send a message to three to five processors of the seven processors 2 to 8, the destination IDs are the processors 2, 3, 4, 5, 6, 7 and 8, the lower limit processor number is 3, and the upper limit processor number is 5.

As shown in the foregoing examples, the invention enables very flexible, specific designation of destination processors.

**Claims**

1.  In a multiprocessor system having a plurality of processors connected through a bus, a message transmission and reception control apparatus in each processor for transmission and reception of messages among processors, the apparatus comprising means for sending a message passing request signal means for generating an acknowledge signal when responding to a message passing request signal received, means for counting acknowledge signals in response to a message passing request signal sent, means for storing the range of the number of message passing destination processors, and means responsive to the count value of the acknowledge signals for determining whether a message can be transmitted to such a number of processors as to be included in the range.

2.  In a system in which the bus has an arbitration bus, apparatus according to claim 1, including means for sending the priority of the processor concerned to the arbitration bus, and means responsive to the priority of the processor concerned and one or more priorities from other one or ones of the processors sent on the arbitration bus for determining whether the message passing request signal can be sent or not.

**3.** Apparatus according to claim 2, wherein the message passing request signal includes one or more identifiers of one or more candidates for the message passing destination processors.

**4.** The multiprocessor system according to claim 2 or 3, wherein the means for defining the range includes means for defining the upper limit of the number and means for defining the lower limit of the number.

**5.** Aparatus according to claim 4, wherein, when the count value of the acknowledge signals is larger than the upper limit, the upper limit number of processors are selected as the message passing destination processors among the processors having responded to the message passing request signal based on a predetermined rule and a message is sent to the processors thus selected.

**6.** The multiprocessor system according to claim 5 wherein the rule is that the processors are be selected based on the priorities sent.

**7.** Apparatus according to claim 4, 5 or 6 including means for initiating message passing when the count value of the acknowledge signals is not less than the lower limit.

**8.** Apparatus according to any preceding claim, wherein the bus comprises a message address bus for transferring one or more message passing destinations, a message data bus for transferring the content of a message, and an arbitration bus for transferring one or more priorities for the arbitration among a plurality of message passing request signals.

**FIG. 1**

**FIG. 5**

FIG. 2

*FIG. 3*

*FIG. 4*

(a)

| PROCESSOR 1 | PROCESSOR 2 | PROCESSOR 3 | PROCESSOR 4 |

INITIATE MESSAGE PASSING

(b)

| PROCESSOR 1 | PROCESSOR 2 | PROCESSOR 3 | PROCESSOR 4 |

ACK

(c)

| PROCESSOR 1 | PROCESSOR 2 | PROCESSOR 3 | PROCESSOR 4 |

COMMAND

# FIG. 6